# EUROPÄISCHE PATENTSCHRIFT

(11) **EP 0 595 099 B1**
(45) Veröffentlichungstag und Bekanntmachung des Hinweises auf die Patenterteilung: **06.03.1996**
(21) Anmeldenummer: 93116437.0
(22) Anmeldetag: 11.10.1993
(51) Int. Cl.: C04B 35/00, B22F 3/10

(54) **Verfahren zur Herstellung von Sinterformteilen**
Process for the production of sintered bodies
Procédé de préparation de corps frittés moulés

(30) Priorität: 21.10.1992 DE 4235429
(43) Veröffentlichungstag der Anmeldung: 04.05.1994
(73) Patentinhaber: BASF Aktiengesellschaft, D-67063 Ludwigshafen (DE)
(72) Erfinder: Truebenbach, Peter, Dr., D-6700 Ludwigshafen (DE); Sterzel, Hans-Josef, Dr., D-6701 Dannstadt-Schauernheim (DE)

(56) Entgegenhaltungen:
- EP-A- 0 413 231
- EP-A- 0 424 739
- EP-A- 0 444 475

## Beschreibung

Die vorliegende Erfindung betrifft ein verbessertes Verfahren zur Herstellung von Sinterformteilen durch Verformen eines Gemisches aus einem keramischen oder metallischen Pulver und Polyoxymethylen als Bindemittel zu einem Grünkörper, Entfernen des Bindemittels durch Behandlung mit einer gasförmigen Säure und Sintern.

Die EP-A 413 231 lehrt ein Verfahren zur Herstellung von anorganischen Sinterformteilen. Gemäß dieser Lehre werden Grünkörper aus sinterbaren Pulvern und Polyoxymethylen als Binder durch Spritzguß oder Strangpressen geformt. Das Bindemittel wird aus diesen Grünteilen durch Behandlung mit einer gasförmigen Säure oder gasförmigem Bortrifluorid vorzugsweise in einem inerten Trägergasstrom entfernt und die so erhaltenen Teile werden gesintert. Dabei werden große Mengen Trägergas verbraucht.

Es bestand die Aufgabe, ein Verfahren bereitzustellen, das es erlaubt, die Entfernung des Bindemittels ohne Trägergas vorzunehmen.

Demgemäß wurde ein Verfahren zur Herstellung von Sinterformteilen durch Verformen eines Gemisches aus einem keramischen oder metallischen Pulver und Polyoxymethylen als Bindemittel zu einem Grünkörper, Entfernen des Bindemittels durch Behandlung mit einer gasförmigen Säure und Sintern gefunden, das dadurch gekennzeichnet ist, daß man das Bindemittel bei einem Druck zwischen 1 mbar und 900 mbar entfernt.

Als Pulver für das erfindungsgemäße Verfahren kommen oxidische, keramische Pulver wie Al₂O₃, Y₂O₃, SiO₂, ZrO₂ und TiO₂ in Betracht, weiterhin oxidfreie Pulver wie Si₃N₄, SiC, BN, AlN, TiC und WC. Als Metallpulver seien z.B. Pulver von Fe, Ni, Cr, Co, Mo, W und Si genannt. Außerdem kommt Graphit in Betracht. Selbstverständlich können auch Mischungen dieser Materialien verwendet werden.

Die Korngröße der verwendeten Pulver liegt in der Regel bei 0,1 bis 50 µm, vorzugsweise 0,1 bis 30 µm, besonders bevorzugt 0,2 bis 10 µm.

Die erfindunsgemäß zu verwendendenden Binder bestehen aus Polyoxymethylen, das vorteilhaft eine Molmasse von 10.000 bis 500.000 aufweist. Neben Homopolymerisaten von Formaldehyd oder Trioxan kommen auch Copolymerisate aus Trioxan mit z.B. cyclischen Ethern wie Ethylenoxid und 1,3-Dioxolan oder Formalen wie Butandiolformal in Betracht, wobei die Mengen der Copolymeren im allgemeinen bei 1 bis 3 Gew.-% der Polymeren liegen.

In der Regel enthalten die zu verformenden Massen neben dem Binder 40 bis 70 Vol.-% Pulver. Weiterhin können den Massen anorganische Fasern oder Whisker aus z.B. Al₂O₃, SiC oder Si₃N₄ zugesetzt werden. Außerdem können sie Hilfsmittel wie Dispergatoren, Schmiermittel wie Polyethylenglykol oder weitere thermoplastische Binder wie Polyethylen oder Polyethylenoxid enthalten. Die Menge an Hilfsmittel liegt in der Regel zwischen 0,1 und 12 Gew.-% der Gesamtmasse.

Nach Vermischen aller Komponenten, z.B. in einem Kneter oder Extruder, werden die Massen verformt, z.B. durch Spritzguß bei Temperaturen von 150 bis 200°C.

Die so erhaltenen Grünkörper werden bei Drücken zwischen 1 mbar und 900 mbar mit Säuren behandelt. Dabei wird der Binder zu gasförmigen Produkten abgebaut, die aus der Reaktionszone abgezogen werden. Die anzuwendenden Drücke liegen vorzugsweise bei 1 bis 900, insbesondere bei 50 bis 250 mbar, da die Entbinderung um so schneller abläuft, je geringer der Druck ist, andererseits aber eine technische Realisierung wesentlich geringerer Drücke aufwendig ist.

Als Säure kommen vor allem solche Säuren in Betracht, deren Siedepunkte unter 200°C liegen, wie die Mineralsäuren HNO₃, HCl und H₂SO₄ sowie Carbonsäuren wie Ameisensäure, Essigsäure oder Trichloressigsäure. Weiterhin kommen Lewis-Säuren in Betracht, vorzugsweise Bortrifluorid, das bevorzugt in Form seiner Etheraddukte von Dimethylether, Diethylether oder Dibutylether eingesetzt werden kann.

Die Temperatur bei der Bindemittelentfernung beträgt im allgemeinen 100 bis 160°C, wobei es bevorzugt ist, unter der Erweichungstemperatur des Binders zu arbeiten.

Die Binderentfernung bei niedrigeren Drücken als Normaldruck ist vergleichbar schnell wie bei Verwendung eines Trägergases bei Normaldruck.

Das erfindungsgemäße Verfahren erlaubt es, in einer besonders bevorzugten Ausführungsform den Binderabbau und das Sintern in derselben Apparatur vorzunehmen. Im Gegensatz dazu kommt es bei Verwendung eines Trägergases zur Entfernung von bei Normaldruck freigesetzten Abbauprodukten des Binders zu Ablagerungen in der Apparatur, die bei einem anschließenden Sintern die Formteile verunreinigen können. Somit verkürzt sich erfindungsgemäß die Zeit für den Binderabbau und das Sintern beträchtlich, da keine Abkühl- und Wiederaufheizzeiten wie beim Überführen der Grünteile in einen Sinterofen entstehen. Die technisch aufwendige Überführung oxidationsempfindlicher Formkörper entfällt ebenfalls.

### Beispiele

### Beispiel 1

1000 g Al₂O₃-Pulver mit einer durchschnittlichen Korngröße von 0,7 µm wurden mit 155 g eines Polyoxymethylencopolymers aus Trioxan und 2 Gew.-% Butandiolformal mit einem durchschnittlichen Molekulargewicht von 15.000 sowie mit 10 Gew.-% Polyethylenglykol mit einem Molekulargewicht von 800 als Schmiermittel verknetet und durch Spritzguß zu Stäben der Abmessungen 6 x 12 x 120 mm³ verarbeitet. Erfindungsgemäß wurden diese Stäbe bei 110°C und 200 mbar mit 10 ml/h konz. Salpetersäure zum Binderabbau behandelt, in derselben Apparatur pyrolysiert und bei 1650°C gesintert. Zum Vergleich wurde der Binderabbau bei 110°C und Normaldruck mit 10 ml/h Säure und 200 l/h Stickstoff als Trägergas vorgenommen, die Formteile in einen Sinterofen überführt und gesintert.

Die nach dem erfindungsgemäßen Verfahren benötigte Zeit verkürzte sich um bis zu 50 % im Vergleich zu der Zeit, die für alle Verarbeitungsschritte im Vergleichsversuch benötigt wurde.

Die so hergestellten Stäbe wiesen nach dem Sintern sehr ähnliche Dichten auf und waren frei von Rissen.

### Beispiel 2

Die nach Beispiel 1 hergestellten Al₂O₃-Stäbe wurden bei 200 mbar und 110°C 6 Std. mit 10 ml/h Ameisensäure behandelt. Der Gewichtsverlust der Stäbchen betrug 11,6 % (Theorie 12,2 %). Nach dem Sintern bei 1.650°C an Luft betrug die Dichte 3,85 g/cm³ (97 % der Theorie).

### Beispiel 3

1000 g Si₃N₄-Pulver, dem 5 Gew.-% Y₂O₃ und 2 Gew.-% Al₂O₃ als Sinteradditive zugesetzt wurden, mit einer durchschnittlichen Korngröße von 0,8 µm wurde mit 230 g eines Polyoxymethylencopolymers aus Trioxan und 2 Gew.-% Butandiolformal mit einem durchschnittlichen Molekulargewicht von 15.000 sowie mit 10 Gew.-% Polyethylenglykol mit einem Molekulargewicht von 800 als Schmiermittel verknetet und durch Spritzguß zu Stäben der Abmessungen 6 x 12 x 120 mm³ verarbeitet.

Die Stäbe wurden bei 130°C eine Stunde lang mit 3 1 Bortrifluorid bei 150 mbar behandelt. Der Gewichtsverlust betrug 15,8 % (Theorie 16,1 %). Nach dem anschließenden Sintern bei 1800°C resultierten Stäbe mit einer Dichte von 3,23 g/cm³ (99 % der Theorie).

## Patentansprüche

1. Verfahren zur Herstellung von Sinterformteilen durch Verformen eines Gemisches aus einem keramischen oder metallischen Pulver und Polyoxymethylen als Bindemittel zu einem Grünkörper, Entfernen des Bindemittels durch Behandlung mit einer gasförmigen Säure und Sintern, dadurch gekennzeichnet, daß man das Bindemittel bei einem Druck zwischen 1 mbar und 900 mbar entfernt.

2. Verfahren nach Anspruch 1, dadurch gekennzeichnet, daß man die Entfernung des Bindemittels und das Sintern in derselben Apparatur vornimmt.

## Claims

1. A process for the production of a sintered molding by molding a mixture of a ceramic or metallic powder and polyoxymethylene as a binder to give a green compact, removing the binder by treatment with a gaseous acid and sintering, wherein the binder is removed at a pressure of from 1 mbar to 900 mbar.

2. A process as claimed in claim 1, wherein removal of the binder and sintering are effected in the same apparatus.

## Revendications

1. Procédé de préparation d'articles moulés frittés par la mise en forme d'un mélange d'une poudre céramique ou métallique et de polyoxyméthylène servant de liant en un corps à l'état vert, l'élimination du liant par le traitement par un acide gazeux et le frittage, caractérisé en ce que l'on élimine le liant sous une pression comprise entre 1 mbar et 900 mbars.

2. Procédé suivant la revendication 1, caractérisé en ce que l'on entreprend l'élimination du liant et le frittage dans le même appareil.
